# EUROPÄISCHE PATENTSCHRIFT

(11) **EP 1 346 911 B1**
(45) Veröffentlichungstag und Bekanntmachung des Hinweises auf die Patenterteilung: **31.05.2006**
(21) Anmeldenummer: 03005722.8
(22) Anmeldetag: 13.03.2003
(51) Int. Cl.: B64D 9/00

(54) **Frachtladesystem in einem Laderaum eines Flugzeugs**
Freight loading system for a freight deck of an aircraft
Système de chargement de cargaison pour une soute d'avion-cargo

(30) Priorität: 19.03.2002 DE 10212123
(43) Veröffentlichungstag der Anmeldung: 24.09.2003
(73) Patentinhaber: Telair International GmbH, 83714 Miesbach (DE)
(72) Erfinder: Huber, Thomas, 83727 Schliersee (DE); Perreiter, Thomas, 83730 Fischbachau (DE); Kieser, Benedikt, 83734 Hausham (DE); Auer, Stefan, 83730 Fischbachau (DE); Urch, Matthias, 85658 Egmating (DE)
(74) Vertreter: Bohnenberger, Johannes

(56) Entgegenhaltungen:
- US-A- 4 225 926
- US-A- 4 864 510
- US-A- 5 213 201
- US-B1- 6 328 154

## Beschreibung

Die Erfindung betrifft ein Frachtladesystem für einen Laderaum eines Flugzeugs und zwar insbesondere eines solchen, bei welchem eine Vielzahl von Rollenantriebseinheiten, sogenannter PDUs, vorgesehen sind, welche Frachtstücke auf entsprechende Steuersignale hin in den Frachtladeraum hinein und aus ihm wieder heraus befördern.

Moderne Frachtflugzeuge, insbesondere der Type Boeing 747, weisen außerordentlich große Frachträume auf, die mit Containern beladen werden. Die Beladungssituationen können hierbei sehr unterschiedlich sein. Es werden nicht nur exakt auf den Frachtraum zugeschnittene Container eingeladen, die an vorbestimmten Plätzen mit dort vorgesehenen Elementen verriegelt werden können. Es werden vielmehr auch solche Frachtstücke verladen, die ihrer Größe entsprechend an bestimmte Plätze gebracht werden müssen. Bei sehr großen Frachtstücken kann es auch notwendig werden, das Frachtstück über eine Seitentür einzuladen und im Frachtraum zu drehen.

In allen Fällen müssen aber Beladevorgänge möglichst schnell vor sich gehen. Beladezeiten bedeuten für den Betreiber des Frachtflugzeugs erhöhte Kosten. Wenn beim Beladen Fehlbedienungen auftreten oder durch extreme Umweltsituationen wie besonders hohe oder niedrige Temperaturen, Staub/Sand, Nässe usw. beladungsnotwendige Betriebssysteme, insbesondere PDUs ausfallen, so kann es zu derartigen Verzögerungen beim Beladen kommen. Hierbei ist immer zu berücksichtigen, dass nicht an allen Flugplätzen Bedienungspersonal zur Verfügung steht, das eine große Erfahrung und gute Schulung hat. Somit sind auch einfache Bedienungsfehler, die zum Ausfall ganzer Systeme führen können, nicht unüblich.

Aus der US 6,328,154 B 1 ist ein Frachtladesystem im Laderaum eines Flugzeugs bekannt. Zur Erleichterung der Ladearbeit sind PDUs in Gruppen miteinander geschaltet, um bestimmte Fördervorgänge einfach und dennoch korrekt durchführen zu können. Wenn bei einem solchen "halbautomatischen" Frachtladesystem ein Einzelteil, insbesondere eine einzelne PDU ausfällt, so bleibt der ganze Betriebsablauf stecken, bis vom Personal manuell eingegriffen wird. Dies führt zwangsläufig zu Betriebsausfallszeit bzw. Ladeunterbrechungen, was untragbar ist.

Der Erfindung liegt die Aufgabe zugrunde, ein Frachtladesystem der eingangs genannten Art dahingehend weiterzubilden, daß Betriebsunterbrechungen in weitestem Umfang verhindert werden können.

Diese Aufgabe wird durch das Frachtladesystem nach Anspruch 1 gelöst.

Durch diese Ausgestaltung ist es möglich, das gesamte System zu überwachen, Fehler zu beheben oder zu unterdrücken und auch bei ungenügend ausgebildetem (oder im hektischen Ladebetrieb Fehler verursachenden) Personal eine zuverlässige Beladung sicherzustellen, da der CMC Anzeigevorrichtungen zum Anzeigen von Betriebszuständen der PDUs und/oder Steuerpanels bereitstellt.

Die Überwachung des Systems erfolgt basierend auf Statusinformationen, die beispielsweise durch das Ausstatten der PDUs mit Sensoren zum Feststellen ihrer Betriebszustände und/oder zum Feststellen von Anwesenheit und Abwesenheit von Frachtstücken im Bereich der jeweiligen PDUs gewonnen werden, wobei die Sensoren mit den Steuerpanels und/oder dem CMC verbunden sind. Zu solchen Sensoren gehören insbesondere auch Temperaturfühler, welche es möglich machen, die Betriebstemperatur der jeweiligen PDU (oder auch in einem Steuerpanel) zu überwachen, um so einer Überhitzung vorzubeugen. Es ist also möglich, im CMC sämtliche aktiven Elemente im Frachtladeraum, insbesondere die PDUs oder die Panels zu überwachen und frühzeitig Fehler festzustellen. Das Wartungspersonal kann auf diese Weise auf Fehler aufmerksam gemacht werden, bevor sie ein kritisches Ausmaß erreichen. Es erfolgt bei der Anzeigevorrichtung vorzugsweise eine "intelligente" Darstellung derart, dass die Betriebszustände und/oder Fehler nicht direkt ihrer physikalischen Natur nach sondern (gegebenenfalls zusätzlich) ihrer Wirkung nach angezeigt werden.

Vorzugsweise sind im CMC Speichereinrichtungen zum Abspeichern von Betriebszustandsverläufen und/oder Fehlerzustandsverläufen der PDUs und/oder Steuerpanels während eines Beladevorgangs vorgesehen. Durch derartige Speichereinrichtungen, die insbesondere nur auf besondere (codierte) Befehle abrufbar sind, wird es möglich, "Lernvorgänge" durchzuführen. Hierzu gehören zum einen die Feststellung von besonders belasteten Bereichen im Laderaum bzw. PDUs/Panels an besonderen Stellen, die dann bei erhöhter Ausfallhäufigkeit verstärkt, anders strukturiert oder angebracht werden können und zum anderen die Feststellung mit erhöhter Häufigkeit vorkommender Bedienungsfehler, so dass dann dem Bedienungspersonal entsprechende Instruktionen zur Benutzung des Systems mitgegeben werden können. Auch die Dokumentation von Betriebsverläufen zum Zwecke der Haftungsfeststellung soll nicht unerwähnt bleiben.

Vorzugsweise weist der CMC mehrere, insbesondere drei Betriebsebenen auf, in denen voneinander verschiedene Gruppen von Informationen abrufbar und von Befehlen ausführbar sind. Diese drei Betriebsebenen sind vorzugsweise
- eine Betriebsebene für das Ladepersonal (Cargolader)
- eine Betriebsebene für die Wartungsleute der Airline und
- eine "versteckte" Betriebsebene für den Hersteller des Frachtladesystems und sein Wartungspersonal.

Der Cargolader bekommt vorzugsweise alle für ihn notwendigen Informationen über die Betriebszustände der Systeme dargestellt und hat die Möglichkeit, begrenzt Fehler des Systems zu "overriden". Auch der Cargolader kann beispielsweise bei Ausfall einer PDU diese absenken, um dann anschließend ohne diese PDU den Beladungsvorgang weiterzuführen.

Das Wartungspersonal der Airline wird durch den Cargolader gerufen, sobald ein von ihm nicht behebbarer Fehler auftritt und vom CMC angezeigt wird. In diesem Fall tauscht das Wartungspersonal die entsprechende defekte Komponente des Frachtsystems aus, damit weiter beladen werden kann.

Die oberste Ebene weist die zuvor bereits beschriebenen Funktionen auf, die zur dauerhaften Wartung und auch Verbesserung des Systems (einschließlich der Personalschulung) verwendbar ist.

Vorzugsweise sind Anzeigeeinrichtungen des CMC vorgesehen und insbesondere im Bereich der Seitentür des Frachtraums angebracht, da diese eine zentrale Position darstellt, von welcher aus die Gesamtfunktion des Frachtladesystems zu überwachen ist.

Der CMC weist weiterhin vorzugsweise Speichereinrichtungen auf, die derart ausgebildet sind, dass mögliche Fehlersituation und/oder Warnsignale abgespeichert und aufgerufen werden können und zwar so, dass zu den Situationen bzw. Signalen gehörige Hilfs- oder Reparaturmaßnahmen gleichzeitig angezeigt werden. Es handelt sich hier also sozusagen um eine Art Expertensystem, das beim Auftreten von Problemen Lösungsmöglichkeiten vorschlägt.

Vorzugsweise ist eine Anzeigeeinrichtung vorgesehen, die derart ausgebildet ist, dass eine Vielzahl von PDUs und derartiger steuerbarer Einrichtungen in einer, ihrer tatsächlichen Einbausituation im Frachtraum entsprechenden Darstellung sowie ihrer momentanen Betriebszustände und Fehlerzustände anzeigbar sind. Mit einer solchen Darstellungseinrichtung, insbesondere einem Flatpanel ist es sehr leicht möglich, die fehlerhaften Einheiten zu lokalisieren und Fehler zu beheben bzw. fehlerhafte Elemente zu umgehen.

Nachfolgend wird die Erfindung anhand eines Ausführungsbeispiels näher erläutert. Hierbei zeigen
- Fig. 1: eine schematisierte Draufsicht auf einen Flugzeug-Frachtladeraum mit der Angabe von Positionen von Steuer-Panels u.dgl. Steuereinrichtungen;
- Fig. 2: ein prinzipielles Verdrahtungsschema und
- Fig. 3: zwei Darstellungen eines Steuerpanels in einer bestimmten Steuersituation.

In der nachfolgenden Beschreibung werden für gleiche und gleich wirkende Teile dieselben Bezugsziffern verwendet.

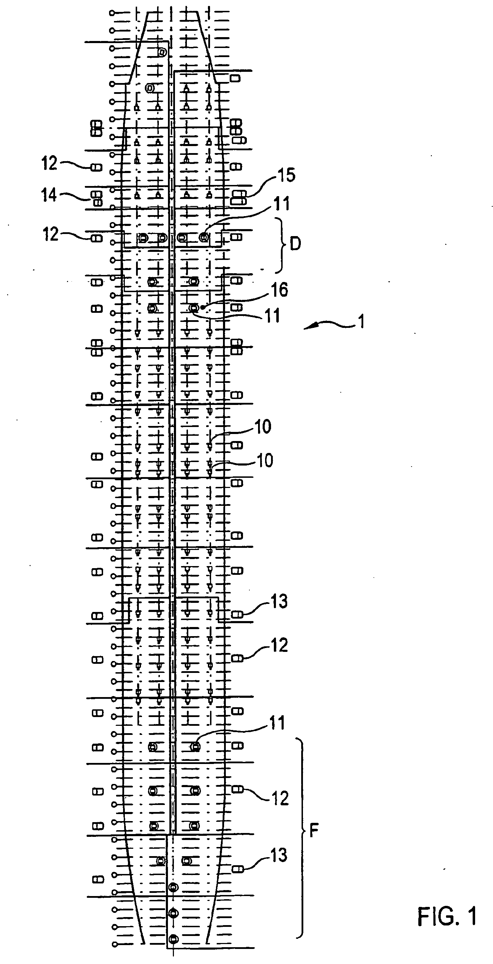

Gemäß Fig. 1 ist in einem Frachtladeraum 1 eines Flugzeugs eine Vielzahl von PDUs 10 zur Längsbewegung eines in den Frachtladeraum eingefahrenen Frachtstücks vorgesehen sowie in besonderen Bereichen, und zwar im Bereich D einer Tür und F des Vorderbereichs um ihre Vertikalachse drehbare PDUs 11.

An den Seitenwänden des Frachtraums sind - in Fig. 1 schematisiert dargestellt - Steuerpanels 12 bis 14 angebracht, über welche die PDUs 10, 11 zum Ein- und Ausladen von PDUs angebracht sind. Das Bedienungspersonal kann also mit den Frachtstücken mitgehen und deren korrekte Positionierung überwachen.

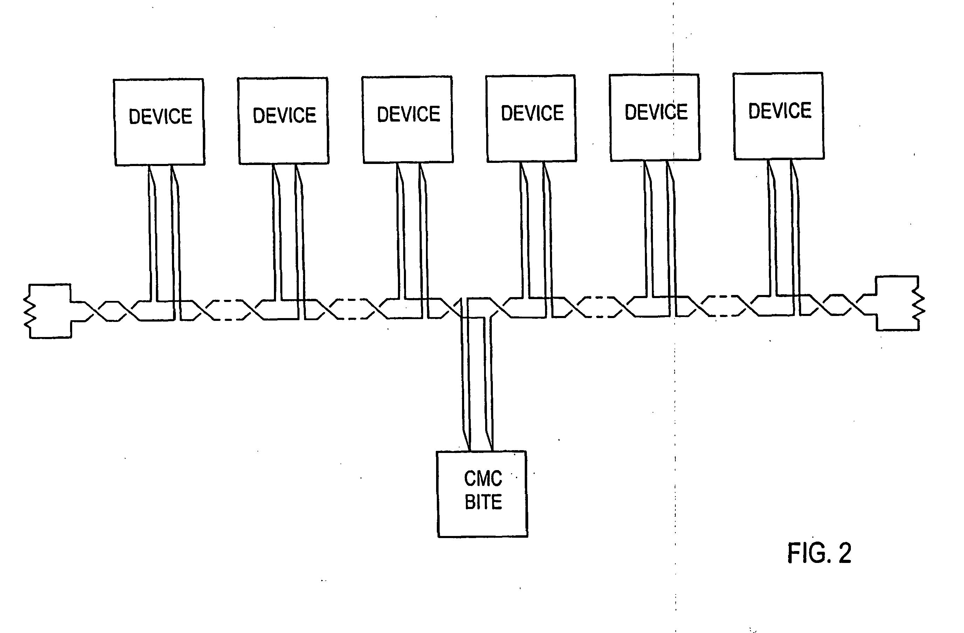

An der Seitenwand hinter dem Bereich D der hinteren Frachtraumseitentür ist ein CMC angebracht, der mit allen PDUs 10, 11 und Panels 12 bis 14 verbunden ist. Die Verbindung erfolgt gemäß Fig. 2 in einem Bussystem, das über eine Leitung (twisted pair) mit Endabschlusswiderständen an allen aktiven Einheiten ("DEVICE" in Fig. 2) angekoppelt ist.

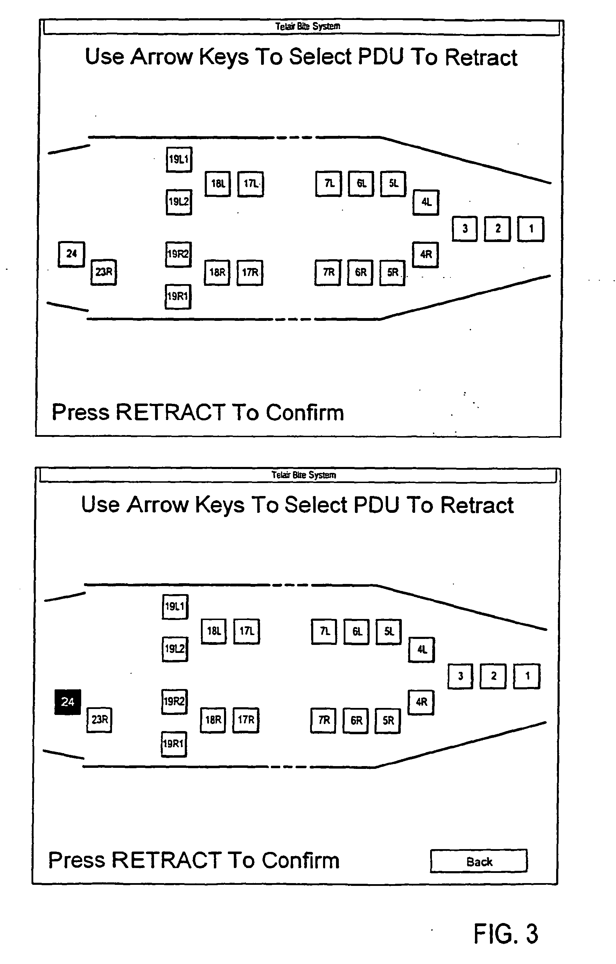

Der CMC 15 und gegebenenfalls weitere Steuerpanels 12 bis 14 weisen Flatpanels (Bildschirme) auf zur Darstellung der aktivierbaren Systeme. Wie in Fig. 3 gezeigt, werden vorzugsweise die aktivierbaren Einheiten (PDUs) auf dem Bildschirm so angezeigt, wie sie im Frachtladeraum 1 tatsächlich vorgesehen sind. Die Parallelität (unter Auslassung sich wiederholender Systeme im Mittelbereich) der Anordnungen in Fig. 1 und Fig. 3 liegt auf der Hand.

Wird festgestellt (oder vom CMC angezeigt), dass irgendwelche PDUs funktionsunfähig sind und in ihrem erhobenen Zustand somit die Weiterbeförderung eines Frachtstücks behindern, so können die entsprechenden PDUs vom Bedienungspersonal abgesenkt werden. Es ist auch möglich, hier "Automatismen" im CMC derart vorzugeben, dass in der jeweiligen Ladesituation nicht benötigte PDUs bei Fehlfunktionen selbsttätig abgeschaltet werden. Weiterhin ist der CMC 15 vorzugsweise derart ausgebildet, dass auf denselben Bildschirmen weitere Betriebszustandsdaten (den räumlichen Anordnungen entsprechend) angezeigt werden, um auf diese Weise das Gesamtsystem leichter überwachen zu können.

Der Vollständigkeit halber sei noch erwähnt, dass im Bereich einiger der PDUs 10, 11 Sensoren 16 vorgesehen sind, die ebenfalls mit dem CMC 15 verbunden und derart ausgebildet sind, dass wichtige Betriebsparameter, insbesondere Temperatur, Bestromungszustand, Position oder Belastung der jeweiligen PDU feststellbar sind. Es ist auch möglich, Sensoren 16 derart vorzusehen, dass über sie feststellbar ist, ob in ihrem Bereich Frachtstücke positioniert sind, um dann gegebenenfalls automatisch die betreffenden PDUs anzuheben und zur Weiterbeförderung der Frachtstücke zu aktivieren.

## Patentansprüche

1. Frachtladesystem für einen Laderaum (1) eines Flugzeugs, umfassend eine Vielzahl von Rollenantriebseinheiten, sogenannte PDUs (10, 11), die durch Steuersignale derart betätigbar sind, dass Frachtstücke in den Laderaum hinein oder aus ihm heraus und innerhalb des Laderaums manövrierbar sind, wobei die PDUs (10, 11) durch Steuerleitungen mit Steuerpanels (12-14) zur Betätigung durch Personal verbunden sind und wobei ein Control Maintenance Computer, ein sogenannter CMC (15), vorgesehen und mit den PDUs und den Steuerpanels (12-14) verbunden und derart ausgebildet ist, dass Statusinformationen von den PDUs (10, 11) und den Steuerpanels abfragbar und die PDUs (10, 11) und/oder Steuerpanels (12-14) vom CMC (15) steuerbar sind,
**dadurch gekennzeichnet, dass**
der CMC (15) Anzeigevorrichtungen zum Anzeigen von Betriebszuständen und/oder Fehlerzuständen der PDUs (10, 11) und/oder Steuerpanels (12-14) umfasst.

2. Frachtladesystem nach Anspruch 1,
**dadurch gekennzeichnet, dass**
der CMC (15) Speichereinrichtungen zum Abspeichern von Betriebszustandsverläufen und/oder Fehlerzustandsverläufen der PDUs (10, 11) und/oder Steuerpanels (12-14) während eines Beladevorgangs aufweist.

3. Frachtladesystem nach einem der vorhergehenden Ansprüche,
**dadurch gekennzeichnet, dass**
der CMC (15) mehrere, insbesondere drei Betriebsebenen aufweist, in denen voneinander verschiedene Gruppen von Informationen abrufbar und von Befehlen ausführbar sind.

4. Frachtladesystem nach einem der vorhergehenden Ansprüche,
**dadurch gekennzeichnet, dass**
Anzeigeeinrichtungen des CMC (15) im Bereich (D) von Türen des Frachtraums (1) anbringbar sind.

5. Frachtladesystem nach einem der vorhergehenden Ansprüche,
**dadurch gekennzeichnet, dass**
der CMC (15) Speichereinrichtungen zum Abspeichern und Aufrufen von möglichen Fehlersituationen und/oder Warnsignalen sowie von dazu gehörigen Hilfs- oder Reparaturmaßnahmen aufweist.

6. Frachtladesystem nach einem der vorhergehenden Ansprüche,
**gekennzeichnet durch**
eine Anzeigeeinrichtung, die derart ausgebildet ist, dass eine Vielzahl von PDUs (10, 11) und derartigen steuerbaren Einrichtungen in einer, ihrer tatsächlichen Einbausituation im Frachtraum entsprechenden Darstellung sowie ihre momentanen Betriebszustände und Fehlerzustände anzeigbar sind.

## Claims

1. A freight loading system for a cargo hold (1) of an aircraft, comprising a plurality of drive roller units, so-called PDUs (10,11), which can be actuated by control signals so that cargo items can be manoeuvred into or out of the cargo hold and inside the cargo hold, wherein the PDUs (10,11) are connected by control lines to control panels (12-14) to be actuated by personnel, and wherein a control maintenance computer is provided, a so-called CMC (15), and is connected to the PDUs and to the control panels (12-14) and is designed so that status information from the PDUs (10,11) and the control panels can be interrogated, and the PDUs (10,11) and/or the control panels (12-14) can be controlled by the CMC (15), **characterised in that** the CMC (15) comprises display means for the operating conditions and/or error conditions of the PDUs (10,11) and/or the control panels (12-14).

2. A freight loading system according to Claim 1, **characterised in that** the CMC (15) has memory means for storing operating condition characteristics and/or error condition characteristics of the PDUs (10,11) and/or the control panels (12-14) during a loading operation.

3. A freight loading system according to any one of the preceding Claims, **characterised in that** the CMC (15) has a plurality of operating levels, in particular three, in which different groups of information can be retrieved and can be executed by commands.

4. A freight loading system according to any one of the preceding Claims, **characterised in that** display means of the CMC (15) can be mounted in the vicinity (D) of doors of the cargo hold (1).

5. A freight loading system according to any one of the preceding Claims, **characterised in that** the CMC (15) has memory means for storing and addressing possible error situations and/or alarm signals, as well as associated auxiliary or repair measures.

6. A freight loading system according to any one of the preceding Claims, **characterised by** a display means which is designed so that a plurality of PDUs (10,11) and like controllable devices can be displayed in a representation corresponding to their actual mounting position in the cargo hold, and also their instantaneous operating conditions and error conditions can be displayed.

## Revendications

1. Système de chargement de cargaison pour une soute (1) d'un avion, comprenant une pluralité d'unités d'entraînement à rouleaux, dites PDU (10, 11), qui peuvent être actionnées par des signaux de commande de telle façon que des éléments de cargaison sont manoeuvables pour être placés dans la soute ou retirés de celle-ci et à l'intérieur de la soute, les PDU (10, 11) étant reliés par des lignes de commande à des panneaux de commande (12-14) aux fins d'actionnement par du personnel et un ordinateur de commande et de maintenance, dit CMC (15), étant prévu et relié aux PDU et aux panneaux de commande (12-14) et étant réalisé de telle façon que des informations d'état des PDU (10, 11) et des panneaux de commande peuvent être appelées et les PDU (10, 11) et/ou les panneaux de commande (12-14) peuvent être commandés par le CMC (15),
**caractérisé en ce que**,
le CMC (15) comprend des dispositifs d'affichage pour afficher des états de service et/ou des états d'erreur des PDU (10, 11) et/ou des panneaux de commande (12-14).

2. Système de chargement de cargaison selon la revendication 1,
**caractérisé en ce que**
le CMC (15) présente des dispositifs de mémorisation pour mémoriser des processus d'états de service et/ou des processus d'états d'erreur des PDU (10, 11) et/ou des panneaux de commande (12-14) pendant une opération de chargement.

3. Système de chargement de cargaison selon l'une des revendications précédentes,
**caractérisé en ce que**
le CMC (15) présente plusieurs, en particulier trois niveaux de service, dans lesquels des groupes, différents les uns des autres, d'informations peuvent être appelés et d'erreurs peuvent être exécutés.

4. Système de chargement de cargaison selon l'une des revendications précédentes,
**caractérisé en ce que**
des dispositifs d'affichage du CMC (15) peuvent être montés dans la zone (D) de portes de la soute (1).

5. Système de chargement de cargaison selon l'une des revendications précédentes,
**caractérisé en ce que**
le CMC (15) présente des dispositifs de mémorisation pour mémoriser et appeler des situations d'erreur et/ou des signaux d'alarme possibles ainsi que des mesures d'aide ou de réparation correspondantes.

6. Système de chargement de cargaison selon l'une des revendications précédentes,
**caractérisé par**
un dispositif d'affichage qui est réalisé de telle façon qu'une pluralité de PDU (10, 11) et de dispositifs de ce type pouvant être commandés, peuvent être affichés dans une représentation correspondant à leur situation de montage réelle dans la soute, ainsi qu'à leurs états de service et états d'erreur instantanés.
